(19) Europäisches Patentamt
European Patent Office
Office européen des brevets

(11) Veröffentlichungsnummer: **0 409 115 B1**

# (12) EUROPÄISCHE PATENTSCHRIFT

(45) Veröffentlichungstag der Patentschrift: **07.12.94**

(51) Int. Cl.5: **C08F 8/30**, C08G 81/02

(21) Anmeldenummer: **90113519.4**

(22) Anmeldetag: **14.07.90**

## (54) Thermoplastisch verarbeitbare Pfropfpolymere.

(30) Priorität: **18.07.89 DE 3923769**

(43) Veröffentlichungstag der Anmeldung:
**23.01.91 Patentblatt 91/04**

(45) Bekanntmachung des Hinweises auf die Patenterteilung:
**07.12.94 Patentblatt 94/49**

(84) Benannte Vertragsstaaten:
**CH DE FR GB IT LI**

(56) Entgegenhaltungen:
**DE-A- 1 905 452**
**DE-A- 2 534 603**
**DE-B- 1 258 604**
**GB-A- 2 060 649**

**CHEMICAL ABSTRACTS, vol. 77, 1972, Columbus, Ohio, US; abstract no 89426D, Tereda, Hiroshi: 'Polyolefin-Polyamide Copolymercomposition' Seite 43, Spalte 2; & JP-A-71038022**

**CHEMICAL ABSTRACTS, vol. 77, no. 16, 16. Oktober 1972, Columbus,Ohio, US; abstract no. 102673D, KONO, TAKUYA: 'POLYOLEFIN-POLYAMIDE BLENDS'Seite 31 ;Spalte 1 ; & JP-A-71038023**

(73) Patentinhaber: **EMS-INVENTA AG**
**Selnaustrasse 16**
**CH-8001 Zürich (CH)**

(72) Erfinder: **Schmid, Eduard, Dr. sc. nat.**
**Valbeuna**
**CH-7402 Bonaduz (CH)**
Erfinder: **Stoeppelmann, Georg, Dr.rer. nat.**
**Sculmserstrasse 14**
**CH-7402 Bonaduz (CH)**

EP 0 409 115 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastisch verarbeitbare Pfropfpolymere, die eine geringe Anzahl an einer zentralen Struktureinheit angepfropfte Aminosäureketten besitzen, ein Verfahren zu ihrer Herstellung und ihre Verwendung.

Die DE 19 05 452 A2 offenbart extrem hochmolekulare Polyamid-Pfropfpolymere zur Herstellung von Fäden und Folien mit einer verringerten Feuchtigkeitsempfindlichkeit, so dass damit alle durch eine Wasseraufnahme negativ beeinflussten mechanischen Eigenschaften verbessert sind. Sie beschreibt ausgehend von dem die Grundkette bildenden Olefinpolymeren mit Molmassen zwischen 10000 und 300000 g/Mol, die 50 bis 350 Seitenketten tragen, die Herstellung von Polymeren mit Molmassen von 300000 bis 800000 g/Mol, welche jedoch für eine Spritzgussverarbeitung nicht mehr geeignet sind.

In der DE 38 19 427 A1 sind mehrfach verzweigte reine Polyamidstrukturen beschrieben, wobei der Stand der Technik bezüglich der Herstellung verzweigter Polyamide unter Verwendung polyfunktioneller Carbonsäuren und Amine ausführlich dargelegt ist.

GB 20 60 649 A beschreibt durch Zusammenkneten aus Polyamid und hochmolekularen Styrol-Maleinsäureanhydrid-Komponenten hergestellte Blends mit feindisperser zweiphasiger Struktur.

In JP 71 38 022 (JP-A-67 8447) wird ein Kompatibilizer für Polyolefin-Polyamid-Blends beansprucht, der durch Addition von Caprolactam oder Nylon 6 an Maleinsäureanhydrid, welches auf das olefinische Polymer aufgepfropft wird, die Verträglichkeit der Blendkomponenten verbessert.

Will man Vernetzungserscheinungen während der hydrolytischen Polymerisation vermeiden, sind nur Aminosäuren und/oder Lactame als Grundmonomere verwendbar. Will man Polymere mit gezielt mehr als 3 Polymerketten pro Molekül herstellen, sind im allgemeinen polyfunktionelle Carbonsäuren und Amine nach streng einzuhaltenden Stöchiometrieregeln miteinander zu kombinieren.

Werden dabei die stöchiometrischen Anteile nicht exakt eingehalten, können sich die Polymereigenschaften drastisch ändern und es besteht bereits im Polykondensationsgefäss die Gefahr der Vernetzung. Zudem sind tri- und mehrfunktionelle Carbonsäuren, wie die in herkömmlicher Weise verwendete Trimesinsäure, nicht leicht zugänglich und teuer. Theoretische Untersuchungen bezüglich des rheologischen Verhaltens zentralverzweigter Polyamide mit Aminosäuren als Monomere sind im "Journal of the American Chemical Society" 70 (1948) auf den Seiten 2709 bis 2718 beschrieben. Die dort verwendeten Polycarbonsäuren sind jedoch nur schwer zugänglich, so dass sich diese Veröffentlichung insbesondere auf rheologische Studien an Polymerlösungen und kleinen Schmelzproben beschränkt.

Der Erfindung lag die Aufgabe zugrunde, neue Polymere mit sehr guten thermoplastischen Verarbeitungseigenschaften und einer erheblichen Variationsbreite ihrer Eigenschaften und Anwendungsgebiete zu schaffen, die sich in ihrem Grundverhalten an die bekannten Polyaminosäurepolyamide anlehnen, welche jedoch ohne Verwendung eines komplizierten Verzweigungsreglersystems hergestellt werden können.

Diese Aufgabe wird durch die Pfropfpolymeren des Anspruchs 1 gelöst.

Die Ansprüche 2 bis 13 beinhalten bevorzugte Ausführungsformen der erfindungsgemässen Pfropfpolymeren und Anspruch 14 ihre Verwendung zur Herstellung von Formteilen.

Demgemäss betrifft die Erfindung neue, thermoplastisch verarbeitbare Polymere, die einen Aufbau aus Styrol-Maleinimid-Grundstruktureinheiten sowie angepfropfte Polymerketten aus Polyaminosäuren besitzen. Die Grundstruktur aus Maleinimid mit Styroleinheiten ist so aufgebaut, dass entsprechend der im Patentanspruch 1 angegebenen Formel I jeweils 1 bis 5, vorzugsweise 1 bis 3 und insbesondere 1 bis 2 Styroleinheiten mit einer Maleinimideinheit verknüpft sind, wobei der Polymerisationsgrad derartiger Styrol-Maleinimid-Einheiten etwa 3 bis 15, bevorzugt 4 bis 8 und insbesondere 5 bis 7 beträgt, und wobei die Molmasse dieser Einheiten damit zwischen 600 und 9000, vorzugsweise zwischen 1200 und 6000 und insbesondere unter 2000 g/Mol liegt.

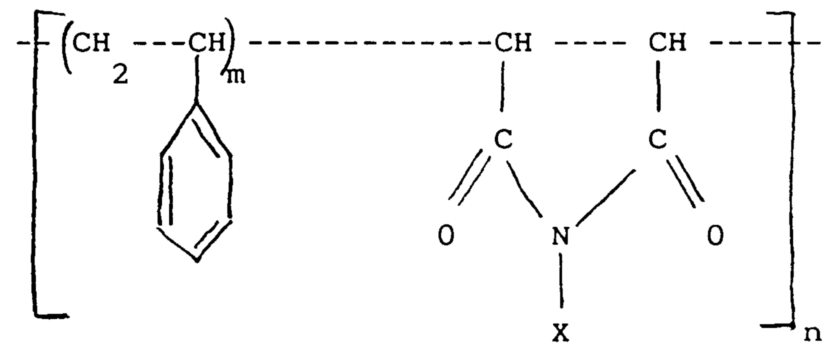 (I)

wobei

m = 1 bis 5 und

n = 3 bis 15 sind.

In der Formel I sind m und n naturgemäss statistische Mittelwerte. An der Stelle X erfolgt die Pfropfung mit Polyaminosäureketten, entsprechend n mit 3 bis 15, bevorzugt 4 bis 8 und insbesondere 5 bis 7, pro Molekül des Pfropfpolymeren. Daraus resultieren bei durchschnittlichen Polymerisationsgraden der Polyaminosäureketten von 30 bis 70 Pfropfpolymere im Molmassebereich von 10000 bis 100000 g/Mol.

Dieser Molekülaufbau gewährleistet im Gegensatz zu einer kammartigen Struktur mit einer sehr grossen Anzahl von Polyaminosäureseitenketten eine ausgezeichnete Schmelzfliessfähigkeit bei unverändert guten mechanischen Eigenschaften, die auch im Vergleich zu Kettenmolekülen mit vergleichbarer Molmasse deutlich verbessert ist.

Die erfindungsgemässen Pfropfpolymeren lassen sich in hervorragender Weise thermoplastisch, insbesondere im Spritzgussververfahren, verarbeiten. Dabei zeichnen sie sich insbesondere dadurch aus, dass sich selbst komplizierte Teile mit dünnen Wandstärken unter Erzielung einer ausgezeichneten Oberfläche erzeugen lassen.

Viele Eigenschaften der neuen erfindungsgemässen Polymeren lassen sich durch die gezielte Wahl der Monomeren für die Polymerketten in einem breiten Bereich vorausbestimmen. Wird zum Beispiel Caprolactam als Monomeres gewählt, besitzt das Pfropfpolymere weitgehend die Eigenschaften von Polyamid-6, wenn der Gewichtsanteil der zentralen Styrol-Maleinimid-Einheit unter etwa 50 Gew.-% liegt. Werden Aminoundecansäure bzw. Aminolaurinsäure als Monomere für die Polymerkette ausgewählt, lehnen sich die Polymereigenschaften an die Eigenschaften der Homopolyamide Polyamid-11 bzw. Polyamid-12 an. Werden Copolyamide aus Gemischen dieser Monomeren angestrebt, können aus dem Mischungsverhältnis der Monomeren und dem Gewichtsanteil der Grundstruktureinheit weitere Polymereigenschaften, wie der Schmelzpunkt, die Kristallisationsfähigkeit, die Wasseraufnahme, die Chemikalienbeständigkeit, die Härte etc., gezielt beeinflusst werden.

Die Zahl n der Styrol-Maleinimid-Einheiten sowie das durch m ausgedrückte Verhältnis von Styrol zu Maleinsäureanhydrid des zur Herstellung der Pfropfpolymeren eingesetzten Styrol-Maleinsäureanhydrid-Harzes (SMA) beeinflussen die Polymereigenschaften ebenfalls nachhaltig. Liegt das Verhältnis m nahe bei 1 und n bei 3 bis 15, vorzugsweise 4 bis 8 und insbesondere bei 5 bis 7, dann entstehen besonders bevorzugte Pfropfpolymere mit einer weitgehend zentral verzweigten Polymerstruktur. Im Vergleich zu beispielsweise linearem Polyamid aus denselben Polyamidbausteinen (beispielsweise 6-Lactam) besitzen sie bei ähnlichem Molekulargewicht deutlich bessere Verarbeitungseigenschaften, weil die Polymerschmelze unter Belastung deutlich besser fliesst.

Die erfindungsgemässen Pfropfpolymeren bestehen aus einer zentralen Styrol-Maleinimid-Grundstruktureinheit mit angepfropften Polyaminosäureketten, welche Carboxylendgruppen tragen, die ihrerseits zumindest teilweise mit primären Aminen umgesetzt sein können. Die Polymermasse kann lineare Polyaminosäuremoleküle in Mengen von 0,1 bis 15 Gew.-% enthalten. Das zur Herstellung der Grundstruktureinheit verwendete SMA-Harz besitzt vorzugsweise einen Aufbau, in welchem 1 bis 5 Styroleinheiten mit einer Maleinsäureanhydrid-Einheit (MA) verbunden sind, wobei die Zahl der Styrol-Maleinsäureanhydrid-Einheiten (SMA) 3 bis 15 beträgt. Besonders bevorzugt sind SMA-Oligomere mit einer geringen Zahl, vorzugsweise 1 bis 3, insbesondere 1 bis 2, Styroleinheiten pro MA und einer Zahl der SMA-Einheiten von 4 bis 8 und insbesondere von 5 bis 7.

Vorzugsweise werden zur Herstellung der Polyaminosäureketten Aminosäuren und/oder Lactame verwendet. Insbesondere werden Caprolactam, Oenantholactam und Laurinlactam sowie die entsprechenden

Aminocarbonsäuren, wie ω-Aminoundecansäure, ω-Aminododecansäure und 4-Aminomethylbenzoesäure verwendet. Je nach den gewünschten Produkteigenschaften können die Monomeren oder ihre Gemische verwendet werden. Wird zur Polymerherstellung ein Gemisch aus SMA-Harz und Monomeren, beispielsweise Aminoundecansäure, eingesetzt, dann besitzt das Pfropfpolymere COOH-Endgruppen.

Soll deren Konzentration herabgesetzt werden, kann dem Monomerengemisch ein primäres Amin zugefügt werden. Je nach der Konzentration an zugesetztem primären Amin wird dabei die Anzahl der Carboxylendgruppen gezielt verringert. Wird eine solche Menge an primärem Amin eingesetzt, die grösser ist als diejenige, welche den vom SMA-Zentrum aus wachsenden Polyaminosäureketten entspricht, dann wirkt das primäre Amin selbst als Kettenregler und in der Polymerschmelze entstehen im entsprechenden Gewichtsanteil lineare Polyaminosäureketten.

In vorteilhafter Weise wird daher das primäre Amin in einer maximalen Konzentration eingesetzt, die der folgenden Formel entspricht:

$$C_A \leqq C_{SMA}\, n + 50\ \mu\text{Mol/g Polymer}$$

Dabei bedeuten:

| | |
|---|---|
| $C_A$ | die Konzentration des primären Amins, |
| $C_{SMA}$ | die Konzentration des SMA-Harzes |
| | je ausgedrückt in µMol/g der entstehenden Polymermasse und |
| n | die Zahl der MA-Einheiten des SMA-Harzes. |

Als primäre Amine kommen vorzugsweise aliphatische Amine mit insbesondere 3 bis 18 Kohlenstoffatomen, die vorzugsweise linear sind, wie Tridecylamin, cycloaliphatische Amine mit 6 bis 18 Kohlenstoffatomen, wie Cyclohexylamin und aromatische Amine mit 6 bis 18 Kohlenstoffatomen, wie Benzylamin, infrage.

Ferner können Amine mit einer kondensationsaktiven und einer sterisch abgeschirmten (gehinderten) Aminogruppe eingesetzt werden, wie:

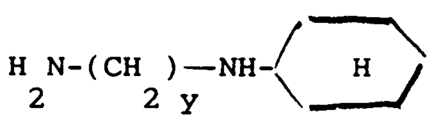

(III)

wobei y für 2 bis 12 steht und insbesondere 3 ist, und:

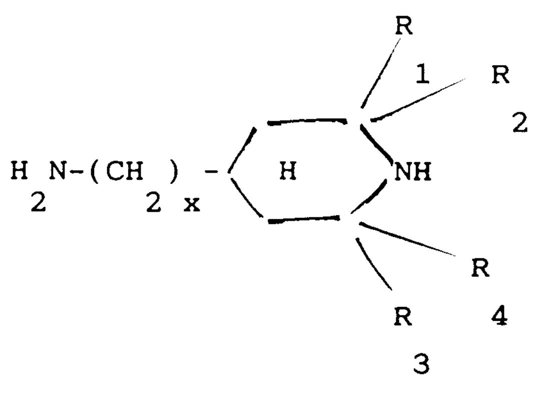

(IV)

wobei x für 0 bis 12 steht und $R_1$, $R_2$, $R_3$ und $R_4$ gleiche oder verschiedene Alkylgruppen mit 1 bis 4 Kohlenstoffatomen, insbesondere Methylgruppen, sind.

Sollen die Carboxylendgruppen des Pfropfpolymeren erhalten bleiben oder sind zusätzliche lineare Polyaminosäureketten erwünscht, dann kann dem zu polymerisierenden Monomerengemisch auch eine Mono- und/oder Dicarbonsäure in kettenlängen-regelndem Anteil zugeführt werden. Als Monocarbonsäuren kommen aliphatische Monocarbonsäuren mit 2 bis 18 Kohlenstoffatomen, wie Essigsäure, aromatische Monocarbonsäuren mit 7 bis 18 Kohlenstoffatomen, wie Benzoesäure, araliphatische Monocarbonsäuren mit 7 bis 18 Kohlenstoffatomen sowie alicyclische Monocarbonsäuren mit 7 bis 18 Kohlenstoffatomen infrage. Als Dicarbonsäuren seien aliphatische Dicarbonsäuren mit 2 bis 18 Kohlenstoffatomen, wie Adipinsäure, aromatische Dicarbonsäure mit 8 bis 18 Kohlenstoffatomen, wie Terephthalsäure, araliphatische mit 9 bis 18

Kohlenstoffatomen sowie alicyclische mit 8 bis 18 Kohlenstoffatomen, erwähnt.

Die Herstellung der erfindungsgemässen Pfropfpolymeren erfolgt vorzugsweise in der Weise, dass den als Monomeren eingesetzten Aminosäuren und Lactamen oder Mischungen davon ein SMA-Harz zugesetzt wird und die Mischung aufgeschmolzen und in an sich bekannter Weise hydrolytisch polymerisiert wird.

Sind die Monomeren ausschliesslich Aminosäuren, so läuft nach dem Aufschmelzen eine reine Polykondensationsreaktion ab und die Aminogruppen der Aminosäuren reagieren mit den MA-Gruppen des SMA-Harzes unter Ausbildung der Imidstruktur, während über die Carboxylgruppen die Ankondensation der wachsenden Polyaminosäureketten erfolgt.

Wird ein Lactam verwendet oder mitverwendet, dann wird in zweckmässiger Weise zur Oeffnung des Lactamringes eine Druckphase vorgeschaltet. Diese Massnahme ist insbesondere bei Verwendung von Laurinlactam zweckmässig. Die Bedingungen für eine derartige Druckphase entsprechen denjenigen, wie sie bei der Polyamid-12-Herstellung eingehalten werden. In zweckmässiger Weise werden Reaktionstemperaturen von 150 °C und darüber eingehalten, wobei die Reaktionstemperaturen vorzugsweise 290 °C nicht überschreiten sollten.

Werden monofunktionelle Verbindungen, insbesondere primäre Amine, in einem Ketten- bzw. Endgruppenregelndem Molanteil mitverwendet, dann ist die Polykondensation in der Endphase verzögert, da die wachsenden Kettensegmente miteinander rekombinieren müssen. In diesem Fall ist die Kondensationszeit gegebenenfalls zu verlängern bzw. die Temperatur zu erhöhen und vorteilhafterweise Vakuum anzulegen. Nach Erreichen des gewünschten Molekulargewichtes kann die Schmelze als Strang abgezogen und der Strang nach Erstarren in üblicher Weise granuliert werden.

Verarbeitungsversuche unter Einsatz erfindungsgemässer Polymerer, beispielsweise durch Spritzguss, zeigen, dass sie unter Belastung sehr gut fliessende Schmelzen ergeben, wobei auch dünnwandige und komplizierte Teile leicht hergestellt werden können. Wegen ihrer, zum Beispiel im Vergleich zu linearem Polyamid, hohen Konzentration an Endgruppen, die bevorzugt Carboxylgruppen sind, eignen sich solche Produkte zum Beispiel als Schmelzkleber, wobei durch spezifische Wahl des Monomerengemisches der Schmelzpunkt gezielt an die Praxisanforderungen angepasst werden kann. Auch eignen sie sich zum Füllen und Verstärken mit Mineralien und Glasfasern, wenn diese (was heute üblich und Stand der Technik ist) mit Aminsilan beschichtet sind. Werden Formulierungen mit -NHR-Kettenenden (R = Alkyl mit 3 bis 18 Kohlenstoffatomen) gezielt hergestellt, so eignen sie sich auch für Silanvernetzung, zum Beispiel nach dem in der CH-PS 663 621 beschriebenen Verfahren, wobei wegen deren möglichen hohen Konzentration an vernetzungsaktiven -NHR-Kettenenden sehr hohe Festigkeiten erhalten werden können.

Auch können die erfindungsgemässen Pfropfpolymeren mit allen üblichen Polymeradditiven sowie Füll- und Verstärkungsstoffen nach dem Stand der Technik modifiziert sein. Als derartige Materialien seien beispielsweise erwähnt: Stabilisatoren (gegen Hitze-, Licht- und Strahleneinwirkung sowie Abbau während des Verarbeitens), Farbstoffe und Pigmente, Weichmacher, Mineralien und Glaskugeln, faserförmige Zusätze zum Beispiel aus Glas, Kohlenstoff und Mineralien.

Die folgenden Beispiele erläutern die Erfindung ohne sie zu beschränken.

Als Monomeren kommen folgende Verbindungen zum Einsatz:

| Verbindung | Abkürzung |
|---|---|
| Caprolactam | CL |
| ω - Aminocapronsäure | ACS |
| ω - Aminolaurinsäure | ALS |

Die Imidbildende Komponente sind Styrol-Maleinsäureanhydrid-Harze (SMA) (Produkte, die unter dem Warenzeichen SMA-Resins® mit den Typenbezeichnungen 1000, 2000 und 3000 von Arco Chemicals, Channelview, Texas, USA, vertrieben werden).

Tabelle 1 charakterisiert die Eigenschaften verschiedener verfügbarer SMA-Harze:

Tabelle 1

| SMA-Typ | Mn(g/Mol) | Schmelzbereich/°C | Säurezahl | Zahl der MA-Einheiten pro SMA-Molekül im stat. Mittel |
|---|---|---|---|---|
| 1000 | 1600 | 150 - 170 | 480 | 6,9 |
| 2000 | 1700 | 140 - 160 | 350 | 5,4 |
| 3000 | 1900 | 115 - 130 | 275 | 4,6 |

Die Säurezahl gibt dabei die Menge KOH in mg an, die benötigt wird, um die Carboxylgruppen von einem Gramm SMA-Harz zu neutralisieren.
In den erfindungsgemässen Pfropfpolymeren, die Amino-Endgruppen enthalten, wurde den Monomeren 3-Amino-1-cyclohexylaminopropan (Laromin C-252 R der Firma BASF) zugefügt.

Beispiel 1 bis 7

Im Labormasstab werden die Ausgangsmonomeren und das SMA-Harz sowie gegebenenfalls das Laromin C-252 mit ungefähr 1-3 ml Wasser in ein Kondensationsrohr eingewogen und bei 200 bis 220°C unter ständigem $N_2$-Strom aufgeschmolzen. Nach 1 Stunde wird die Temperatur auf 250 bzw. 270°C erhöht und 4 bis 6 Stunden kondensiert.

Die jeweiligen Rezepturen und Versuchsbedingungen sind der Tabelle 2 zu entnehmen. Es ergeben sich stets ungefähr 70g Pfropfpolymere, deren Eigenschaften zur Charakterisierung ebenfalls in Tabelle 2 aufgeführt sind. An diesen drucklos geführten Laboransätzen wird gezeigt, dass durch das Verhältnis von Aminolaurinsäure zu SMA-Harz die Lösungsviskosität, Schmelzviskosität und die COOH-Gruppen-Konzentration festgelegt wird. Weiterhin ist ersichtlich, dass in den erfindungsgemässen Beispielen die $NH_2$-Endgruppenkonzentration nicht grösser als 7 $\mu$Mol/g Polymer ist.

Die Glasumwandlungstemperaturen (Tg) und Schmelzpunkte (Schmp.) wurden mit dem Thermo-Analysis-System 990 (Du Pont) gemessen. Als Tg wurde der Beginn der Glasumwandlungs-, als Schmp. das Maximum der Schmelzendotherme genommen.

Die Lösungsviskositäten $\eta$ rel. wurden entsprechend DIN 53 727 bestimmt, wobei die Polymerkonzentration in m-Kresol 5 mg/ml betrug.

Die Schmelzviskositäten wurden bei 270°C und einer Belastung von 122.6 N nach einer Verweilzeit von 10 Min. mit dem MFI-21.6 Analyzer der Firma Göttfert analog DIN 53 735 gemessen.

Beispiele 8 bis 13

Die Beispiele 8 bis 13 im halbtechnischen Masstab werden durch Polykondensation in Stahlautoklaven, die für Ueberdruck ausgelegt sind und mit Wärmeträgeröl beheizt werden, erhalten. Dabei werden die Monomeren, das SMA-Harz und gegebenenfalls das Laromin in den Mengen nach Tabelle 3 eingewogen.

Für die Chargen mit 7 kg Produkt werden 500 ml Wasser, für die 45 kg-Chargen werden 6 l Wasser hinzugegeben. Der Autoklav wird verschlossen, Stickstoff eingeleitet und unter Rühren die Temperatur auf 220°C erhöht. Nachdem sich ein Druck von 10 bar aufgebaut hat, wird die Schmelze 3 Stunden bei dieser Temperatur und diesem Druck gerührt. Anschliessend wird der Autoklav unter Stickstoff geöffnet, so dass sich der Ueberdruck abbauen kann.

Nach Erreichen von Atmosphärendruck wird die Temperatur auf die Werte, wie in Tabelle 3 angegeben, erhöht.

Nach Beendigung der Reaktion wird der Autoklav geöffnet und das Polymere durch Einleiten von Stickstoff ausgetragen. Der Strang wird durch ein Wasserbad gezogen und granuliert. Die Pfropfpolymeren,welche auf Caprolactam sowie Aminocapronsäure basieren, werden durch Extraktion mit Wasser vom monomeren Caprolactam befreit. Das Granulat wird bei 80°C im Vakuum getrocknet.

Zur Untersuchung der mechanischen Eigenschaften werden Zugstäbe von 4mm Dicke vom Typ Nr. 3 gemäss DIN 53 455 und zur Messung der Kerbschlagzähigkeit werden Norm-Kleinstäbe 50 x 6 x 4 mm gemäss DIN 53 453 durch Spritzguss hergestellt. Der Elastizitätsmodul aus dem Zugversuch wird nach DIN 53 457 bestimmt.

Die Resultate der Untersuchungen an den Produkten der Beispiele 8 bis 13 sind den Tabellen 4 und 5 zu entnehmen.

Tabelle 2.

| Beisp. | Rezeptur: ALS/g | Rezeptur: SMA 1000 µmol/g | Rezeptur: SMA 1000 g | Verfahren: T/°C | Verfahren: t/h | Verfahren: T/°C | Verfahren: t/h | Analytik: Tg/°C | Analytik: Schmp/°C | Analytik: ηrel | Analytik: SMV / Pa.s 122.6 N/270°C | Analytik: Endgruppen µmol/g COOH | Analytik: Endgruppen µmol/g $NH_2$ |
|---|---|---|---|---|---|---|---|---|---|---|---|---|---|
| 1 | 72,6 | 10 | 1,1 | 200 | 1 | 270 | 4 | 24 | 180 | 2,45 | 1691 | 63 | <5 |
| 2 | " | 20 | 2,2 | " | " | 250 | " | 24 | 180 | 1,83 | 75 | 137 | <5 |
| 3 | " | 30 | 3,4 | " | " | " | " | 26 | 179 | 1,62 | 20 | 151 | 7 |
| 4 | " | 40 | 4,5 | " | " | " | " | 23 | 177 | 1,45 | <10 | 256 | <5 |
| 5 | " | 50 | 5,6 | 220 | " | " | " | 24 | 174 | 1,47 | " | 310 | " |
| 6 | " | 75 | 8,4 | 200 | " | " | " | 18,5 | 171 | 1,31 | " | 429 | " |
| 7 | " | 100 | 11,2 | " | " | " | " | 19 | 166 | 1,22 | " | 500 | " |

Abkürzungen:

ACS Aminocapronsäure
ALS Aminolaurinsäure
CL Caprolactam
SMA Styrol-Maleinsäure-Anhydrid-Harz
LAR Laromin C-252
SMV Schmelzviskosität

Tabelle 3.

| | Rezeptur | | | | | | | Verfahren Druckphase | | | Entgasen | | | |
|---|---|---|---|---|---|---|---|---|---|---|---|---|---|---|
| Beisp. | CL/kg | ACS/kg | ALS/kg | SMA 1000 µmol/g | kg | LAR µmol/g | g | T/°C | t/h | p/at | T/°C | t/h | T/°C | t/h |
| 8 | 45 | 0,55 | - | 15 | 1,15 | - | - | 220 | 3 | 10 | 240 | 3 | 270 | 3 |
| 9 | 7,5 | - | 0,24 | 15 | 0,19 | - | - | 220 | 3 | 10 | 240 | 3 | 270 | 3 |
| 10 | 45 | 0,52 | - | 15 | 1,08 | - | - | 220 | 3 | 10 | 240 | 1 | 270 | 2 |
| 11 | 7,5 | 0.24 | - | 15 | 0,19 | 125 | 152 | 220 | 3 | 10 | 240 | 3 | 270 | 3 |
| 12 | - | - | 45,00 | 20 | 1,44 | - | - | 220 | 3 | 10 | 270 | 4 | - | - |
| 13 | 2,3 | - | 4,00 | 20 | 0,20 | - | - | 220 | 3 | 10 | 240 | 1 | 270 | 4 |

Abkürzungen:

ACS Aminocapronsäure
ALS Aminolaurinsäure
CL Caprolactam
SMA Styrol-Maleinsäure-Anhydrid-Harz
LAR Laromin C-252
SMV Schmelzviskosität

Tabelle 4. Analytik Pfropfpolymere Technikumsmassstab.

| Beisp. | Endgruppen COOH [µmol/g] | Endgruppen $NH_2$ [µmol/g] | Lösungs-Viskosität η rel | SMV [Pa.s] | SCHMP [°C] | TG [°C] |
|---|---|---|---|---|---|---|
| 8 | 138 | 12 | 1,802 | 51 | 220 | 42 |
| 9 | 113 | <5 | 2,195 | 214 | 220 | 44 |
| 10 | 135 | 13 | 2,167 | 174 | 220 | 43 |
| 11 | 22 | 132 | 1,872 | 165 | 222 | 42 |
| 12 | 147 | 9 | 2,120 | 264 | 176 | 20 |
| 13 | 119 | 10 | 2,036 | 60 | 126 | 7 |

Tabelle 5. Mechanische Eigenschaften.

| Beisp. | Kerbschlagzähigkeit. [KJ/m²]/23°C Tro. | Kerbschlagzähigkeit. [KJ/m²]/23°C Kond. | Zug-E-Modul [N/mm²] Tro. | Zug-E-Modul [N/mm²] Kond. | Yield-Spannung [N/mm²] Tro. | Yield-Spannung [N/mm²] Kond. | Yield-Dehnung [%] Tro. | Yield-Dehnung [%] Kond. | Reiss-Festigkeit [N/mm²] Tro. | Reiss-Festigkeit [N/mm²] Kond. |
|---|---|---|---|---|---|---|---|---|---|---|
| 8 | 3 | O.B. | - | 700 | 83 | 30 | 12 | 27 | 59 | 52 |
| 9 | 3 | O.B. | - | 1270 | 85 | 39 | 11 | 45 | 57 | 45 |
| 10 | 2 | O.B. | - | 960 | - | 43 | - | 37 | 89 | 48 |
| 11 | 2 | 23 | - | 1110 | - | 37 | - | 39 | 65 | 42 |
| 12 | - | 5 | - | 1470 | - | 53 | - | 25 | 49 | 48 |
| 13 | 13 | O.B. | - | 540 | 48 | 29 | 14 | 35 | 27 | 25 |

Abkürzungen:

Tro. Trocken
Kond. Konditioniert
O.B. ohne Befund

## Patentansprüche

**1.** Thermoplastisch verarbeitbare einphasige Pfropfpolymere mit verbesserten Fliesseigenschaften, welche hauptsächlich aus einer Styrol-Maleinimid-Grundstruktureinheit der Formel I

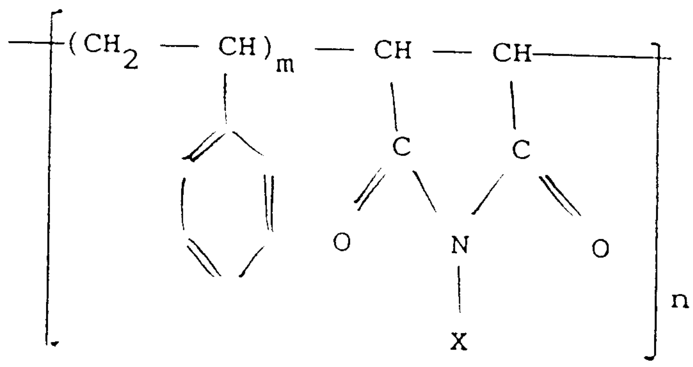

I

wobei

- m für 1 bis 5 und
- n für 3 bis 15 steht

und

- die Molmasse die Grundstruktureinheit zwischen 600 und 9000 g/Mol liegt

und an der Stelle X angepfropften Polyaminosäureketten bestehen.

2. Pfropfpolymere gemäss Anspruch 1, dadurch gekennzeichnet, dass die Styrol-Maleinimid-Grundstruktureinheit der Formel I über Imidbindungen bei X mit den Polyaminosäureketten verknpüft ist.

3. Pfropfpolymere gemäss den Ansprüchen 1 oder 2, dadurch gekennzeichnet, dass die Molmasse zwischen 10 000 und 100 000 g/Mol liegt.

4. Pfropfpolymere gemäss den Ansprüchen 1 bis 3, dadurch gekennzeichnet, dass m für 1 bis 3 und n für 4 bis 8, und besonders m für 1 bis 2 und n für 5 bis 7 steht.

5. Pfropfpolymere gemäss den Ansprüchen 1 bis 4, dadurch gekennzeichnet, dass die Polyaminosäureketten aus Aminosäuren und/oder Lactamen, insbesondere aus Caprolactam, Oenantholactam, Laurinlactam, Aminoundecansäure, Aminododecansäure, 4-Aminomethylbenzoesäure, allein oder in Kombination aufgebaut sind.

6. Pfropfpolymere gemäss den Ansprüchen 1 bis 5, dadurch gekennzeichnet, dass die Polyaminosäureketten aus Polyamid-6, Polyamid-11 oder Polyamid-12 - Homo- oder Copolyamiden bestehen.

7. Pfropfpolymere gemäss den Ansprüchen 1 bis 6, dadurch gekennzeichnet, dass die Polyaminosäureketten Carboxylendgruppen tragen, die zumindest teilweise mit primären Aminen umgesetzt sind.

8. Pfropfpolymere gemäss den Ansprüchen 1 bis 7, dadurch gekennzeichnet, dass die primären Amine Alkylreste mit 3 bis 18 Kohlenstoffatomen, cyclische Alkylreste mit 6 bis 18 Kohlenstoffatomen oder aromatische Reste mit 6 bis 18 Kohlenstoffatomen aufweisen oder eine sterisch gehinderte zweite Aminofunktion tragende Amine, insbesondere solche der Formeln III und/oder IV sind,

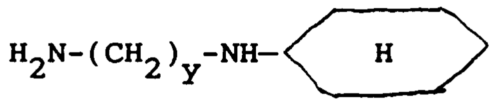

III

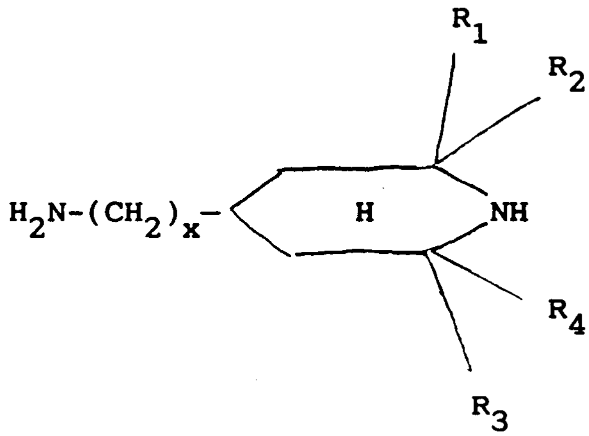

IV

worin

X für 0 bis 12

Y für 2 bis 12, insbesondere 3 und

$R_1$ bis $R_4$ für gleiche oder verschiedene Alkylgruppen mit 1 bis 4 Kohlenstoffatomen, insbesondere für Methylgruppen, stehen.

**9.** Pfropfpolymere gemäss den Ansprüchen 1 bis 8, dadurch gekennzeichnet, dass die Polymermasse 0.1 bis 15 Gew.% lineare Polyaminosäuremoleküle enthält.

**10.** Verfahren zur Herstellung von thermoplastisch verarbeitbaren Pfropfpolymeren gemäss Anspruch 1, dadurch gekennzeichnet, dass Aminosäuren und/oder Lactamen ein Styrol-Maleinsäureanhydrid-Harz der Formel (II),

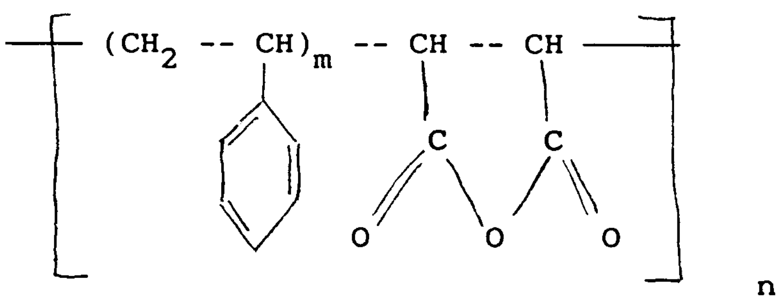

wobei

m für 1 bis 5

n für 3 bis 15 steht,

zugesetzt wird, die Mischung unter Inertgas aufgeschmolzen und unter Rühren bei Temperaturen bis 290 °C und dem sich einstellenden Druck die Polymerisationsreaktion zur Erreichung des gewünschten Molekulargewichts durchgeführt wird.

**11.** Verfahren nach Anspruch 10, dadurch gekennzeichnet, dass dem Ausgangsmonomer eine Mono- und/oder Dicarbonsäure in kettenlängenregelndem Molanteil zugesetzt wird.

**12.** Verfahren nach Anspruch 10, dadurch gekennzeichnet, dass der Ausgangsmischung ein monofunktionelles Amin in einem maximalen Molanteil zugesetzt wird, welcher der Formel

$C_A \leqq C_{SMA}\ n + 50\ \mu Mol/g$ Pfropfpolymeres

entspricht, wobei

$C_A$ für die Konzentration des Amines

$C_{SMA}$ für die Konzentration des SMA-Harzes (jeweils in $\mu$Mol/g Pfropfpolymeres) und

n für die Zahl der Maleinsäureanhydrid-Gruppen pro Styrol-Maleinsäureanhydrid-Molekül steht.

**13.** Verfahren nach Anspruch 10 oder 12, dadurch gekennzeichnet, dass der Mischung ein Amin, das ausser der kondensationsaktiven eine sterisch gehinderte Aminogruppe enthält, und insbesondere ein Amin der Formel III oder IV ist, zugesetzt wird.

**14.** Verwendung der thermoplastisch verarbeitbaren Pfropfpolymeren gemäss den Ansprüchen 1 bis 13, zur Herstellung von Formteilen insbesondere solchen mit dünnen Wandstärken.

## Claims

**1.** Thermoplastically-processible single-phase graft polymers with improved flow properties, which comprise predominantly a styrene/maleimide basic structural unit Formula I

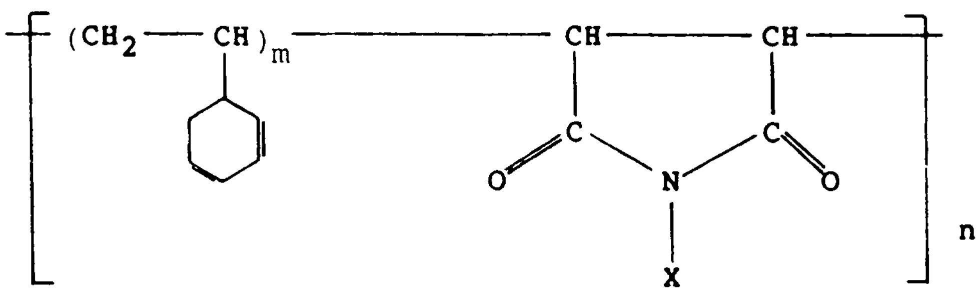

I

wherein m is 1 to 5, n is 3 to 15 and the molar mass of the basic structural unit lies between 600 and 9000 g/mole, and polyamino-acid chains grafted on at the position X.

**2.** Graft polymers according to claim 1, characterised in that the styrene/maleimide basic structural unit is linked with the polyamino-acid chains at X via imide bonds.

**3.** Graft polymers according to claims 1 or 2, characterised in that the molar mass lies between 10000 and 100000 g/mole.

**4.** Graft polymers according to claims 1 to 3, characterised in that m is 1 to 3 and n is 4 to 8, and preferably m is 1 to 2 and n is 5 to 7.

**5.** Graft polymers according to claims 1 to 4, characterised in that the polyamino-acid chains are made up of amino-acids and/or lactams, especially of caprolactam, oenantholactam, laurolactam, aminoundecanic acid, aminododecanic acid, 4-aminomethylbenzoic acid, alone or in combination.

**6.** Graft polymers according to claims 1 to 5, characterised in that the polyamino-acid chains comprise polyamide-6, polyamide-ll or polyamide-12 homo- or copolyamides.

**7.** Graft polymers according to claims 1 to 6, characterised in that the polyamino-acid chains carry terminal carboxyl groups that are reacted at least in part with primary amines.

**8.** Graft polymers according to claims 1 to 7, characterised in that the primary amines include alkyl groups having 3 to 18 carbon atoms, cyclic alkyl groups having 6 to 18 carbon atoms or aromatic groups having 6 to 18 carbon atoms, or a sterically-hindered amine having a second amino group, in particular those of Formulae III and/or IV

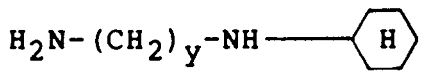

III

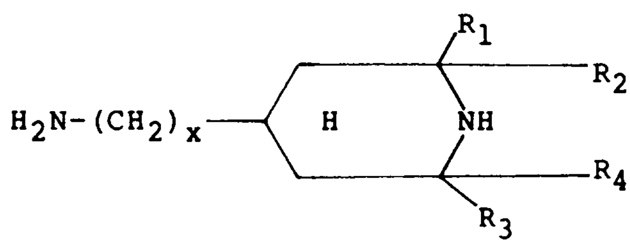

IV

wherein x is 0 to 12, y is 2 to 12, in particular 3, and $R_1$ to $R_4$ represent identical or different alkyl groups having 1 to 4 carbon atoms, in particular methyl groups.

**9.** Graft polymers according to claims 1 to 8, characterised in that the polymer mass contains 0.1 to 15% by weight of linear polyamino-acid molecules.

**10.** Process for the production of thermoplastically-processible graft polymers according to claim 1, characterised in that amino-acids and/or lactams are added to a styrene/maleic acid anhydride resin of Formula II

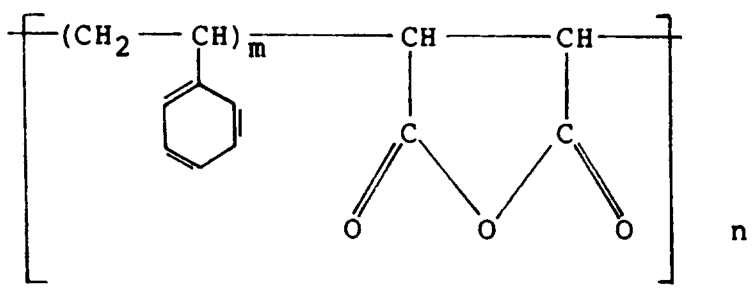

wherein m is 1 to 5 and n is 3 to 15, the mixture is melted under inert gas and the polymerisation reaction is carried out with stirring at temperatures of up to 290 °C under the pressure of reaction until the desired molecular weight is reached.

**11.** Process according to claim 10, characterised in that a monocarboxylic and/or dicarboxylic acid is added in a chain length-regulating molar proportion to the starting monomer.

**12.** Process according to claim 10, characterised in that, to the starting mixture, there is added a monofunctional amine in a maximum molar proportion corresponding to the formula

$C_A \leqq C_{SMA}\, n + 50$ µmol/g graft polymer

wherein $C_A$ is the concentration of the amine, $C_{SMA}$ is the concentration of the SMA resin (each in µmol/g of graft polymer) and n represents the number of maleic acid anhydride groups per styrene/maleic acid anhydride molecule.

**13.** Process according to claim 10 or 12, characterised in that there is added to the mixture an amine which contains a sterically-hindered amino group in addition to the condensation-sensitive amino group, in particular an amine of Formula III or IV.

**14.** Use of the thermoplastically-processible graft polymers according to claims 1 to 13, for the production of shaped articles, in particular those with thin wall thicknesses.

**Revendications**

**1.** Polymères greffés transformables par des procédés basés sur la thermoplasticité, à une phase, présentant des propriétés d'écoulement améliorées, qui sont constitués essentiellement d'une structure de base formée par des motifs styrène-maléimide, de formule I :

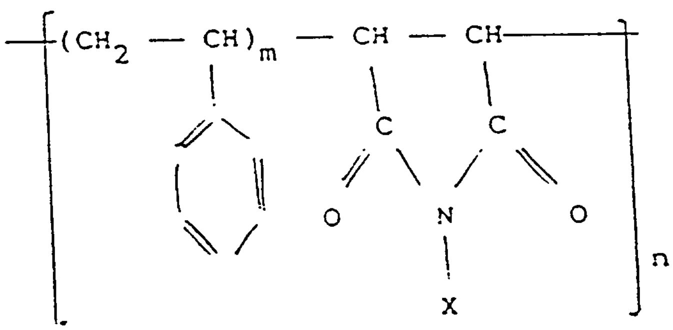

I

dans laquelle m représente un nombre de 1 à 5 et n représente un nombre de 3 à 15, la masse moléculaire de la structure de base étant comprise entre 600 et 9000 g/mol, et de chaînes poly(amino-acide) greffées à l'endroit X.

**2.** Polymères greffés selon la revendication 1, caractérisés en ce que la structure de base styrène-maléimide de formule I est reliée aux chaînes poly(amino-acide) par l'intermédiaire de liaisons imide en X.

**3.** Polymères greffés selon la revendication 1 ou 2, caractérisés en ce que leur masse moléculaire est comprise entre 10.000 et 100.000 g/mol.

**4.** Polymères greffés selon l'une quelconque des revendications 1 à 3, caractérisés en ce que m représente un nombre de 1 à 3 et n représente un nombre de 4 à 8, et en particulier m représente un nombre de 1 à 2 et n représente un nombre de 5 à 7.

**5.** Polymères greffés selon l'une quelconque des revendications 1 à 4, caractérisés en ce que les chaînes poly(amino-acide) sont édifiées à partir d'amino-acides et/ou de lactames, en particulier du caprolactame, de l'oenantholactame, du laurolactame, de l'acide aminoundécanoïque, de l'acide aminododécanoïque, de l'acide 4-aminométhylbenzoïque, pris isolément ou en combinaison.

**6.** Polymères greffés selon l'une quelconque des revendications 1 à 5, caractérisés en ce que les chaînes poly(amino-acide) sont constituées d'homo- ou copolyamides de polyamide-6, polyamide-11 ou polyamide-12.

**7.** Polymères greffés selon l'une quelconque des revendications 1 à 6, caractérisés en ce que les chaînes poly(amino-acide) portent des groupes terminaux carboxyle qui sont transformés au moins en partie par réaction avec des amines primaires.

**8.** Polymères greffés selon l'une quelconque des revendications 1 à 7, caractérisés en ce que les amines primaires portent des groupes alkyle ayant 3 à 18 atomes de carbone, des groupes cycloalkyle ayant 6 à 18 atomes de carbone ou des groupes aromatiques ayant 6 à 18 atomes de carbone, ou bien sont des amines portant une deuxième fonction amine, à empêchement stérique, en particulier des amines de formule III et/ou des amines de formule IV :

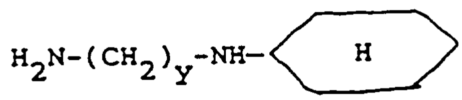

III

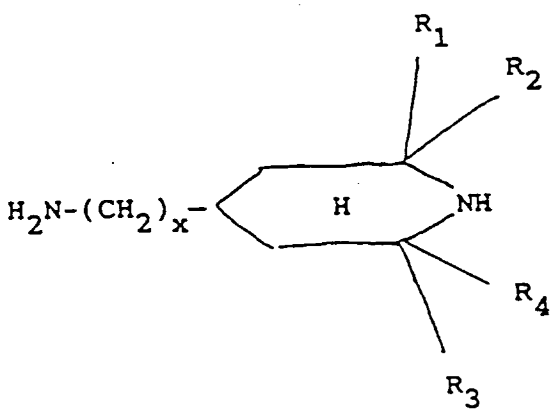

IV

formules dans lesquelles x représente un nombre de 0 à 12, y représente un nombre de 2 à 12, en particulier 3, et $R_1$ à $R_4$ représentent des groupes alkyle, identiques ou différents, ayant 1 à 4 atomes de carbone, en particulier des groupes méthyle.

**9.** Polymères greffés selon l'une quelconque des revendications 1 à 8, caractérisés en ce que la matière polymère contient 0,1 à 15 % en poids de molécules de poly(amino-acide) linéaires.

**10.** Procédé de préparation de polymères greffés, transformables par des procédés basés sur la thermoplasticité, selon la revendication 1, caractérisé en ce que l'on ajoute à des amino-acides et/ou des lactames, une résine de styrène et d'anhydride maléique de formule (II) :

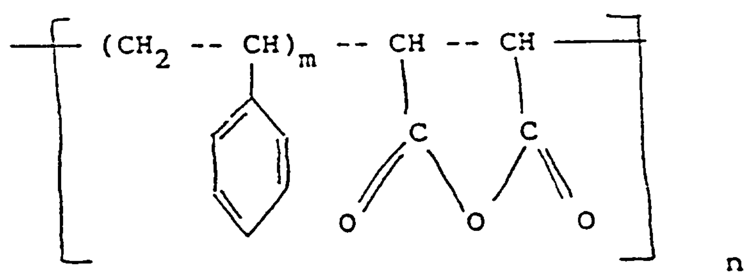

dans laquelle m représente un nombre de 1 à 5 et n représente un nombre de 3 à 15, on fait fondre le mélange sous une atmosphère de gaz inerte et, en agitant le mélange à des températures atteignant 290 °C au plus et sous la pression qui s'établit, on réalise la réaction de polymérisation pour atteindre la masse moléculaire souhaitée.

**11.** Procédé selon la revendication 10, caractérisé en ce que l'on ajoute au monomère de départ, un acide monocarboxylique et/ou un acide dicarboxylique, en une proportion molaire qui règle la longueur des chaînes.

**12.** Procédé selon la revendication 10, caractérisé en ce que l'on ajoute au mélange de départ, une amine monofonctionnelle, en une proportion molaire maximale qui correspond à la formule :

$C_A \leqq C_{SAM}\, n + 50\ \mu mol/g$ de polymère greffé

dans laquelle $C_A$ représente la concentration de l'amine, $C_{SAM}$ représente la concentration de la résine SAM (les deux concentrations étant exprimées en $\mu$mol/g de polymère greffé), et n représente le

nombre de groupes anhydride maléique par molécule de résine styrène-anhydride maléique.

**13.** Procédé selon la revendication 10 ou 12, caractérisé en ce que l'on ajoute au mélange, une amine qui contient un groupe amino à empêchement stérique en plus du groupe amino actif dans la condensation, et qui est en particulier une amine de formule III ou IV.

**14.** Utilisation des polymères greffés, transformables par des procédés basés sur la thermoplasticité, selon les revendications 1 à 13, pour la préparation de pièces moulées, en particulier celles ayant des épaisseurs de parois faibles.